# EUROPEAN PATENT APPLICATION

(11) **EP 1 382 880 A1**
(43) Date of publication of application: **21.01.2004**
(21) Application number: 03015891.9
(22) Date of filing: 11.07.2003
(51) Int. Cl.: F16D 69/02

(54) **Clutch facing and method for manufacturing the same**

(30) Priority: 11.07.2002 JP 2002202051
(71) Applicant: Aisin Seiki Kabushiki Kaisha, Kariya-shi, Aichi-ken (JP)
(72) Inventor: Ichikawa, Hiroshi, Nishio-shi, Aichi-ken (JP); Matsukawa, Teruo, Nishio-shi, Aichi-ken (JP); Nakamura, Tatsuo, Aisin Seiki Kabushiki Kaisha, Kariya-shi, Aichi-ken (JP); Kuroda, Yoshhiro, Aisin Seiki Kabushiki Kaisha, Kariya-shi, Aichi-ken (JP)
(74) Representative: Kühn, Alexander

(57) **Abstract**

A clutch facing includes a powder member made of powdered material and at least one seat of reinforcement formed by crossing reinforcing material in at least different two directions. The powder member is provided on at least one side of the reinforcement.

## Description

### FIELD OF THE INVENTION

The present invention relates to a clutch facing and a method for manufacturing the same.

### BACKGROUND OF THE INVENTION

Hitherto, a clutch facing of resin mold type which is molded by filling powder mixed material comprising powder resin, powder rubber, friction modifier and so on in molding die is known as a clutch facing used to a clutch disc. However, since the clutch facing is rotated at high speed, it is necessary to have a strength against burst (burst strength) for enabling the dutch facing to resist centrifugal force. In the clutch facing of resin mold type which is molded only by filling the powder mixed material in the molding die, the burst strength is insufficient

In recent years, as disclosed in Japanese Patent Publication No. 60-27705, a clutch facing which the burst strength is Improved by continuous glass fiber takes root. In such clutch facing, the continuous glass fiber which resin, rubber and so on are impregnated on the surface thereof is coiled across the circumference of the clutch facing. Then, pressing process, heat treating process, grinding process and so on are carried out and the clutch facing is formed. Thereby, the continuous glass fiber functions as reinforcement and the burst strength Is improved.

In the above prior clutch facing, however, a process for coiling the continuous glass fiber on the clutch facing is required and therefore the manufacturing cost of the clutch facing is increased.

### SUMMARY OF THE INVENTION

It is, therefore, an object of the present invention to provide a clutch facing and a method for manufacturing the same which can improve the burst strength by easy manufacturing process.

According to one aspect of the present invention, a clutch facing includes a powder member made of powdered material and at least one seat of reinforcement formed by crossing reinforcing material in at least different two directions. The powder member is provided on at least one side of the reinforcement.

According to another aspect of the present invention, a method for manufacturing a clutch facing comprises steps of pouring powdered material In a die, putting at least one seat of reinforcement formed by crossing reinforcing material in at least different two directions on upper surface of the powdered material and forming a powder member made of the powdered material on one side of the reinforcement

According to another aspect of the present invention, a method for manufacturing a clutch facing comprises steps of pouring powdered material in a die, putting on upper surface of the powdered material at least one seat of reinforcement formed by crossing reinforcing material in at least different two directions and coated with resin. The reinforcement is put on the upper surface of the powdered material in the heated condition and a powder member made of the powdered material is formed on one side of the reinforcement.

### BRIEF DESCRIPTION OF THE DRAWINGS

The above and other objects, features and advantages of the present invention will be more apparent and more readily appreciated from the following detailed description of preferred exemplary embodiment of the present invention, taken in connection with the accompanying drawings, in which;
Fig.1 is a perspective view of a clutch facing according to an embodiment of the present Invention,
Fig. 2 Is a plan view of a seat member and a reinforcement according to an embodiment of the present invention, and
Fig. 3 Is schematic diagrams of manufacturing processes of a clutch facing according to an embodiment of the present invention.

### DETAILED DESCRIPTION OF THE PRESENT INVENTION

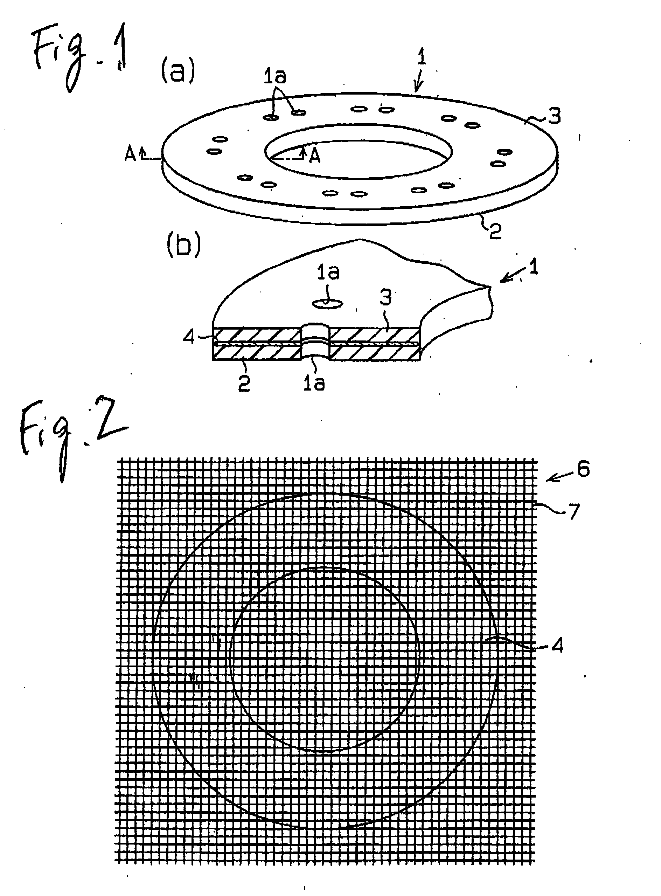

An embodiment of the present invention will be described with reference to attached Figs. 1 to 3. A clutch facing 1 is formed by a ring shaped flat plate and the cross section thereof in the radial direction has a long quadrangle shape as shown in Fig. 1(b). The clutch facing 1 has a plural rivet holes 1a which penetrate In the axial direction and is formed by a first powder member 2, a second powder member 3 and a reinforcement 4 nipped between the first powder member 2 and the second powder member 3.

The first powder member 2 and the second powder member 3 are formed by pressing powder mixed material 13, 14 which are powdered material dispensed powder resin, powder rubber and friction modifier (see Fig. 3). The powder mixed material 13, 14 forming the first and second powder members 2, 3 has different composition ratio of the powder resin, the powder rubber and the friction modifier in response to the difference of the operations of the first and second powder members 2, 3. In particular, the powder mixed material 13 forming the first powder member 2 has a composition ratio which is better for use in frictional condition. The powder mixed material 14 forming the second powder member 3 is dispensed by materials which can produce at a low price.

The reinforcement 4 is formed so as to have a ring shape which is approximately the same as the clutch facing 1. The reinforcement 4 is formed by punching a seat member 6 by a pressing machine (not shown).

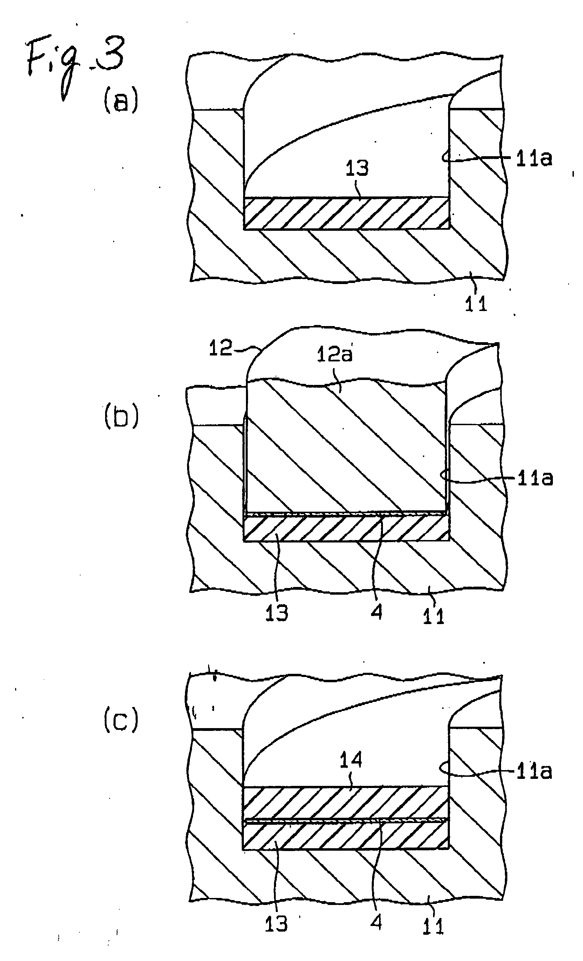

As shown in Fig. 2, the seat member 6 is formed by grass fiber bulk 7 which functions as reinforcing material. The grass fiber bulk 7 are intersected each other and are weaved so as to be mesh. The seat member 6 is formed by this weaved grass fiber bulk 7. The grass fiber bulk 7 is formed by binding up a plural grass fibers so as to have approximately a circular cross section.

The diameter of the grass fiber bulk 7 is determined by the number of the grass fibers and Is determined in response to the burst strength being required for the clutch facing 1. Namely, in case that the burst strength required for the clutch facing 1 is large, the seat member 6 which is formed by weaving the grass fiber bulk 7 the having large diameter.

The both sides of the seat member 6 are coated by resin. Accordingly, the both sides of the reinforcement 4 which Is formed by punching the seat member 6 are also coated by the resin.

The clutch facing 1 is secured to a clutch disc (not shown) by fitting rivets into the rivet holes 1a. The clutch facing 1 Is secured to the clutch disc so that the first powder member 2 is positioned at the side of a flywheel or a pressure plate and so that the second powder member 3 is positioned at the side of a clutch disc.

Since the first powder member 2 is positioned at the side of the clutch disc, the first powder member 2 is in frictional condition between other parts such as the flywheel or the pressure plate and so on when the clutch is engaged. On the other hand, since the second powder member 3 is positioned at the side of the clutch disc so as to rotate together with the dutch disc In one body, the second powder member 3 is not In frictional condition.

Next, a method for manufacturing the clutch facing will be described with reference to Fig. 3. In the manufacturing of the clutch lacing 1, a die 11 and pressing member 12 are used. The die 11 is provided with a ring shaped concave groove 11a. The pressing member 12 is formed by a ring shaped projection portion 12a which corresponds to the concave groove 11 a. The width of the projecting portion 12a in the radial direction is set to a width so that the projecting portion 12a can slide In the axial direction under the condition that both side walls of the projecting portion 12a contacts with both side walls of the concave portion 11 a approximately.

As shown in Fig. 3(a), when the clutch facing 1 is manufactured, at first, a given amount of the powder mixed material 13 forming the first powder member 2 is poured in the concave groove 11a. In this time, the powder mixed material 13 is poured so as to keep even height around the circumference In the concave groove 11a.

Next, the reinforcement 4 which is punched into ring shape is put on the powder mixed material 13. At this time, the reinforcement is heated more than about 40 °C in advance. Thereby, the resin which is coated on the surface of the reinforcement 4 becomes a sensitive condition. As a result, the resin coated on the surface of the reinforcement 4 and the powder mixed material 13 become a combined state easily.

Next, as shown In Fig. 3(b), the pressing member 12 presses the powder mixed material 13 and the reinforcement 4 In the axial direction under the condition that the reinforcement 4 is put on the powder mixed material 13 and carries out preform of the first powder member 2 and the reinforcement 4. In this preform, pressure and heat are added and the first powder member 2 and the reinforcement 4 are integrated in some measure. Further, in this time, the powder mixed material 13 gets in the clearance of the grass fiber bulk 7 which is weaved in mesh.

Next, as shown in Fig. 3(c), the powder mixed material 14 forming the second powder member 3 is poured on the reinforcement in the concave groove 11a. As same as the forming of the first powder member 2, the preform of the second powder member 3 is carried out after the powder mixed material 14 is poured. Namely, after the powder mixed material 14 is poured so as to keep even height around the circumference in the concave groove 11a, pressure and heat are added to the second powder member 3 by the pressing member 12. Further, in this time, the powder mixed macterial 14 gets in the clearance of the grass fiber bulk 7 which Is weaved in mesh. Thereby, the mixed condition of the powder mixed material 13 and the powder mixed material 14 generates in the clearance of the grass fiber bulk 7.

When the preform of the first powder member 2, the reinforcement 4 and the second powder member 3 is carried out and shapes thereof are formed in some measure, finally a main-forming of the clutch facing 1 is done by the pressing member 12. The main-forming of the dutch facing 1 is performed by adding high pressure and heat to high temperature as compared to the perform.

When the molding process of the clutch facing 1 is finished, a heat treatment process is carried out In the heat treatment process, heat is added to the clutch facing 1 so that the temperature is changed step-by-step within a range between about 180 °C and 210°C. Thereby, the powder mixed materials 13, 14 and the reinforcement 4 are combined each other and the clutch facing 1 is become rigid.

The clutch facing 1 to which the heat treatment process is carried out goes to a grinding process and the grinding of the first and second powder members 2, 3 is carried out. The grinding of the first and second powder members 2, 3 is carried out so that the thickness of the clutch facing 1 becomes a predetermined thickness. When the grinding process is carried out, rivet holes 1a are formed and completed product of the clutch facing 1 is obtained.

According to the above described embodiment, following effects are obtained.
(1) The clutch facing 1 is formed by pouring the powder material 13, the reinforcement 4 and the powder mixed material 14 in the concave groove 11a of the die 11 and by pressing by the pressing member 12. Further, the reinforcement 4 is formed by punching the seat member 6 made of the grass fiber bulk 7. Accordingly, the manufacturing of the dutch facing 1 is very easy and high burst strength can be obtained.
(2) The reinforcement 4 is formed by the grass fiber bulk 7 which is formed by binding up a plural grass fibers so as to have approximately a circular cross section. Accordingly, it is able to form the reinforcement 4 by light material while keeping enough tensile strength.
(3) The first powder member 2 is formed by the powder mixed material 13 having a composition ratio which is better for use in frictional condition. On the other hand, the second powder member 3 is formed by the powder mixed material 14 which does not come influence of friction and which can obtain at a low price. Accordingly, it is able to decrease the manufacturing cost of the clutch facing 1.
(4) The resin coated on the surface of the grass fiber bulk 7 and the powder mixed materials 13, 14 are combined each other and the powder member 2, 3 and the reinforcement 4 are integrated. Thereby, the bonding force becomes higher. As a result, the burst strength of the clutch facing 1 can be improved.
(5) The reinforcement is heated more than about 40 °C in advance and is pressed. Accordingly, the reinforcement 4 and the powder mixed materials 13 are easily combined and the integration of the reinforcement 4 and the powder mixed materials 13 can be improved.
(6) Since the reinforcement 4 Is formed in mesh shape, the powder mixed materials 13, 14 of the first and second powder members 2, 3 are combined each other through the clearance and are integrated. Accordingly, further strong bonding force between the first and second powder members 2, 3 and the reinforcement 4 can be obtained and the high burst strength can be obtained.
(7) The preform of the first and second powder member 2, 3 is carried out before the whole molding of the clutch facing 1. Accordingly, pressure and heat are added to the first and second powder members 2, 3 in advance before the thickness of the clutch facing 1 thickens and the heat is speedy transmitted to the first and second powder members 2, 3 and the reinforcement 4. Therefore, it is able to manufacture the clutch facing effectively.

In the above embodiment, it is able to add following changes.

The cross section of the grass fiber bulk 7 is not limited to a circular cross section. For example, it is able to form the grass fiber bulk 7 by binding up a plural grass fibers so as to have approximately a long square cross section.

The direction of the grass fiber bulk 7 is not limited to the above embodiment. For example, the reinforcement 4 can be formed by three grass fiber bulk 7 which extend toward three directions and which are crossed at 60 degree.

Further, it is able to change the number of the reinforcement 4 between the first and second powder members 2, 3 in response to the desired burst strength.

The reinforcement 4 may be formed by carbon fiber, ceramic fiber and so on.

The clutch facing 1 may include at least the first powder member 2 contacting with the flywheel or the pressure plate and the reinforcement 4. Therefore, it is able to form a clutch facing in which only the first powder member 2 is provided on one side surface of the reinforcement 4.

Further, it is able to form the first and second powder member 2, 3 by a powder mixed material having same composition.

The principles, preferred embodiment and mode of operation of the present invention have been described in the foregoing specification. However, the invention which is intended to be protected is not to be construed as limited to the particular embodiments disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

A clutch facing includes a powder member made of powdered material and at least one seat of reinforcement formed by crossing reinforcing material in at least different two directions. The powder member is provided on at least one side of the reinforcement.

## Claims

1. A clutch facing comprising:
a powder member made of powdered material and
at least one seat of reinforcement formed by crossing reinforcing material in at least different two directions,
wherein the powder member is provided on at least one side of the reinforcemen.

2. A clutch facing as recited In Claim 1, wherein the reinforcing material is grass fiber.

3. A clutch facing as recited In Claims 1 or 2, wherein the powder member includes a first powder member and a second powder member which are provided at both side of the reinforcing material and the first powder member and the second powder member are formed by different powdered materials, respectively.

4. A clutch facing as recited in Claims 1 or 2, wherein the powder member indudes a first powder member and a second powder member which are provided at both side of the reinforcing material and the first powder member and the second powder member are formed by different powdered materials having different compositions, respectively.

5. A dutch facing as recited in one of Claims 1 to 4, wherein the reinforcing material is coated with resin.

6. A method for manufacturing a clutch facing comprising steps of, pouring powdered material in a die,
putting at least one seat of reinforcement formed by crossing reinforcing material in at least different two directions on upper surface of the powdered material and forming a powder member made of the powdered material on one side of the reinforcement.

7. A method for manufacturing a clutch facing comprising steps of, pouring powdered material in a die,
putting on upper surface of the powdered material at least one seat of reinforcement formed by crossing reinforcing material In at least different two directions and coated with resin,
wherein the reinforcement Is put on the upper surface of the powdered material in the heated condition and a powder member made of the powdered material is formed on one side of the reinforcement.

8. A method for manufacturing a clutch facing as recited in Claims 6 or 7 further comprising a step of pouring the powdered material on the upper surface of the reinforcement, wherein a powder member made of the powdered material is formed on the other side of the reinforcement
